Europäisches Patentamt

European Patent Office

Office européen des brevets

(19)

(11) **EP 0 899 008 A1**

(12) **DEMANDE DE BREVET EUROPEEN**

(43) Date de publication:
03.03.1999 Bulletin 1999/09

(51) Int. Cl.$^6$: **B01J 8/00**, B01J 8/24,
B65G 53/16

(21) Numéro de dépôt: 98202763.3

(22) Date de dépôt: 18.08.1998

(84) Etats contractants désignés:
AT BE CH CY DE DK ES FI FR GB GR IE IT LI LU
MC NL PT SE
Etats d'extension désignés:
AL LT LV MK RO SI

(30) Priorité: 20.08.1997 BE 9700693

(71) Demandeur:
SOLVAY POLYOLEFINS EUROPE - BELGIUM
(Société Anonyme)
1050 Bruxelles (BE)

(72) Inventeurs:
• Ruelle, Jean-Jacques
1370 Saint-Rémy-Geest (BE)
• Liegeois, Roger
4000 Liege (BE)

(74) Mandataire: Troch, Geneviève
Solvay Polyolefins Europe-Belgium
(Société Anonyme)
Département de la Propriété Industrielle
Rue de Ransbeek, 310
1120 Bruxelles (BE)

(54) **Dispositif de déchargement d'un récipient sous pression**

(57) Dispositif de déchargement d'un récipient (1) sous pression comprenant au moins deux écluses rotatives (8,9,10) en série, une vanne (6) située entre le réacteur (1) et la première écluse (8), ainsi qu'un point d'introduction d'un gaz (5) situé entre ladite vanne (6) et ledit réacteur (1). Le dispositif est appliqué au déchargement d'une poudre de polymère d'un réacteur de polymérisation à lit fluidisé.

FIG.I

## Description

L'invention concerne un dispositif de déchargement d'une poudre d'un récipient sous pression. Elle concerne en particulier un dispositif de déchargement d'une poudre de polymère d'un récipient sous pression et plus particulièrement un dispositif de déchargement d'une poudre de polymère d'un réacteur de polymérisation à lit fluidisé.

Il est connu que la polymérisation des alpha-oléfines utilisant des catalyseurs très réactifs est souvent réalisée en phase gazeuse dans des réacteurs à lit fluidisé fonctionnant à pression élevée, généralement comprise entre 20 et 40 bar.

Ces procédés en phase gazeuse utilisent au moins un réacteur à lit fluidisé comportant, en général, une virole cylindrique de grande hauteur équipée :

- d'un distributeur de gaz (grille),
- d'un ou plusieurs points d'introduction de catalyseur, co-catalyseur, prépolymère ou de premier bloc de polymère (configuration bimodale),
- d'un ou plusieurs points de déchargement du solide, à travers la paroi latérale du réacteur et/ou à travers le distributeur. Le courant gazeux qui traverse le distributeur sert à la fois
- d'agent de fluidisation : il maintient à l'état de couche fluidisée relativement dense les particules de polymère en croissance,
- de réactif : il contient le(s) monomère(s) mélangé(s) à un ou plusieurs gaz inerte(s),
- de caloporteur : il s'échauffe au contact des particules et emporte la chaleur dégagée par la réaction vers un ou plusieurs échangeur(s) externe(s) avant d'être recyclé vers le réacteur (navette gazeuse).

Compte tenu de la pression élevée lors de la polymérisation en phase gazeuse, les systèmes classiques de déchargement de solides comprennent généralement au moins un réservoir intermédiaire relié au réacteur et à un réservoir de réception au moyen de conduites qui sont équipées chacune d'une vanne. Ces vannes fonctionnent séquentiellement de manière à ce que le système de déchargement fonctionne comme un sas. Une partie du polymère formé et du gaz contenu dans le réacteur passe d'abord dans le réservoir intermédiaire puis dans le réservoir de réception. Le bon fonctionnement du réservoir intermédiaire nécessite généralement l'utilisation d'un système d'équilibrage de pression mettant en communication le réservoir intermédiaire et la partie supérieure du réacteur. Un tel système de déchargement est décrit dans le brevet GB 137574.

Diverses modalités ou variantes sur le principe du sas sont décrites ou évoquées dans les demandes de brevet européen EP 0 071 430, EP 0 088 655 et EP 0 202 076.

La demande de brevet européen EP 0 250 169 décrit un système comportant deux vannes rotatives entraînées de manière à ne jamais être ouvertes simultanément.

Tous ces systèmes de déchargement fonctionnent en discontinu et nécessitent l'utilisation de vannes s'ouvrant séquentiellement. Ce mode de fonctionnement en discontinu est souvent à l'origine de fluctuations de pression et/ou de débits ou de fluctuations de niveau du lit fluidisé à l'intérieur du réacteur. Les perturbations dues aux fluctuations de débit ont une incidence négative sur le fonctionnement des secteurs en aval de la polymérisation.

Ces systèmes de déchargement comportent souvent un grand nombre de vannes à ouverture rapide traversées par le solide. Ces vannes sont sujettes à des problèmes d'érosion et d'étanchéité et nécessitent par conséquent une maintenance onéreuse.

Les écluses rotatives sont connues depuis un certain temps déjà et ont été décrites en détail, p.ex., dans "Particulate Matter", mars 1973, p. 73-81; dans "Bulk Solids Handling", Vol. 5, N° 4, Août 1985; et dans le brevet US 4,784,298. Elles sont constituées d'un bati (stator) dans lequel tourne une roue (rotor) munie d'un certain nombre d'alvéoles séparées les unes des autres par des pales. Le solide s'écoule par gravité dans les alvéoles situées dans la partie supérieure de l'écluse et est transporté vers la partie inférieure au cours du mouvement de rotation. Le jeu entre les pales du rotor et le stator doit être minimisé pour réduire les fuites de gaz.

L'écluse rotative est l'appareil le plus souvent utilisé comme dispositif d'alimentation des transports pneumatiques en pression. Dans cette application, l'écluse sert à transporter du solide pulvérulent d'une faible pression, typiquement la pression atmosphérique, vers une pression plus élevée, généralement limitée à quelques bar. Dans un tel cas, se produit un contre-courant de gaz qui est susceptible de perturber le remplissage des alvéoles par le solide si l'étanchéité de l'écluse est insuffisante ou si elle n'est pas pourvue d'un système d'évacuation du contre-courant gazeux (Ruf (A.) et al., "The role of high-presssure airblocks", TIZ international Powder & Bulk Magazine, Vol 115, N° 1-2, 1991 et Hoppe (H.) et al., "Modern rotary valve technology for various pneumatic conveying systems", Bulk Solids Handling, Volume 5, Number 4, August 1985).

On connaît aussi des applications des écluses rotatives dans le transport pneumatique par aspiration. Dans ce cas, on observe un co-courant de solide et de gaz mais sous des pressions différentielles limitées à l'ordre de 1 bar (cfr. Ruf (A.) ci-dessus).

L'application d'écluses rotatives au déchargement d'un réacteur de type lit fluidisé est également connue. Le brevet allemand D139527 p.ex. décrit un dispositif de chargement et de déchargement d'un réacteur de type lit fluidisé pour la granulation de matériaux pulvérulents comprenant une seule écluse rotative. Cependant, dans cette application, les différences de pression sont très faibles et de loin inférieures à celles que l'on rencontre dans les réacteurs de polymérisation actuels.

La présente invention vise à proposer un dispositif de déchargement d'une poudre d'un récipient sous pression comprenant de telles écluses et permettant de décharger le récipient en continu. Le dispositif selon l'invention est de préférence appliqué au déchargement d'une poudre de polymère d'un récipient sous pression et plus particulièrement au déchargement d'une poudre de polymère d'un réacteur de polymérisation à lit fluidisé.

A cet effet, l'invention concerne un dispositif de déchargement d'un récipient sous pression caractérisé en ce qu'il comprend :

au moins deux écluses rotatives en série,
une vanne située entre le réacteur et la première écluse,
ainsi qu'un point d'introduction d'un gaz situé entre ladite vanne et ledit récipient.

Dans le cadre de la présente invention, on entend par récipient sous pression un récipient contenant du gaz sous une pression d'au moins 10 bar, de préférence d'au moins 15 bar et plus particulièrement d'au moins 20 bar.

Dans le cadre de la présente invention, on entend par poudre tout solide divisé. De préférence, les dimensions des particules de solides sont inférieures à 15 mm, plus particulièrement inférieures à 10 mm.

Un des avantages du dispositif selon l'invention est qu'il permet un déchargement en continu du récipient sans perturbation de la pression régnant à l'intérieur du dit récipient. Les produits issus du récipient peuvent alimenter en continu les installations situées en aval du récipient, sans les perturber. Un tel avantage est particulièrement intéressant pour le déchargement des réacteurs de polymérisation dans lesquels toute perturbation est susceptible d'entraîner des modifications de la réaction de polymérisation.

Un deuxième avantage est que le dispositif de déchargement ne contient pas de pièces en mouvement discontinu ce qui diminue l'usure et par là même les coûts de maintenance et d'entretien.

Le débit de solide évacué par ce dispositif de déchargement peut être estimé par le produit des facteurs (vitesse de rotation)x(volume total des alvéoles)x(masse volumique du solide en vrac)x(coefficient de remplissage des alvéoles). Dans un dispositif de déchargement ayant un co-courant important de gaz et de solide, il a été observé expérimentalement que le coefficient de remplissage pouvait être pris égal à 1. Dans le cas du déchargement d'un réacteur de polymérisation à lit fluidisé, le débit de déchargement du polymère formé peut donc être adapté à la quantité de matière produite en augmentant ou en diminuant la vitesse de rotation des écluses permettant ainsi de maintenir le niveau du lit fluidisé constant pendant toute l'opération.

Le dispositif de déchargement peut également être adapté au type de polymère produit par une modification de la géométrie du rotor p.ex. en changeant la forme des alvéoles des écluses rotatives.

Comme le débit de soutirage des gaz du récipient est régulier tout au long du déchargement, ce dispositif de déchargement permet d'éviter des coups de bélier dans les tuyauteries causés par les ouvertures et fermetures des vannes.

Le débit de soutirage des gaz du récipient peut être modulé en agissant sur les débits de fuite des écluses rotatives p.ex. en changeant la géométrie de l'écluse rotative ou bien en introduisant un gaz par le point d'introduction situé entre la vanne et le récipient.

Le débit de fuite au travers de chaque écluse rotative dépend de plusieurs facteurs dont les principaux sont : le nombre total d'alvéoles étanches, la longueur du rotor et le jeu entre le rotor et le stator. On a constaté que le débit de fuite au travers de chaque écluse est à peu près proportionnel à la différence de pression entre l'entrée et la sortie.

La vanne située entre le réacteur et la première écluse permet d'isoler le récipient avant de le décharger.

Dans le cas d'un dispositif de déchargement d'un réacteur de polymérisation à lit fluidisé, elle permet notamment d'isoler le réacteur pendant les opérations de démarrage de la polymérisation.

Avant le déchargement, on injecte un gaz contenant de préférence le gaz qui est présent dans le récipient, par le point d'introduction situé en amont de la vanne. Le débit de gaz injecté permet d'empêcher les particules de poudre de se déposer dans le tuyau d'évacuation et de le colmater avant le début de l'opération de déchargement du récipient. L'injection de ce gaz pendant le déchargement du réacteur permet d'éviter le tassement des particules dans le tuyau d'évacuation en amont des écluses. Le débit de ce gaz est réglé de préférence de manière à ce que la vitesse du gaz à l'intérieur du tuyaux soit comprise entre 1 et 10 fois la vitesse de fluidisation des particules.

Dans le cas du déchargement d'un réacteur de polymérisation à lit fluidisé, le dit gaz est de préférence le monomère qui sera consommé dans le réacteur.

Selon un premier mode de réalisation avantageux, le dispositif de déchargement comprend en outre un point d'introduction pour un gaz, situé entre ladite vanne et la première écluse.

En injectant un gaz par le point d'introduction se trouvant entre la vanne et la première écluse, il est possible de mettre les écluses rotatives sous pression avant le commencement de l'opération de déchargement du récipient c.-à-d. avant l'ouverture de la vanne située en amont de la première écluse rotative. Ceci facilite le début des opérations de déchargement et permet de minimiser les perturbations dans le récipient dues à la chute de pression lors de l'ouverture de la vanne située entre le récipient et la première écluse rotative. En pratique, cette mise sous pression des écluses rotatives permet de minimiser les sollicitations mécaniques des écluses lors de l'ouverture de la vanne en début de déchargement.

Pendant le déchargement du récipient, il est possible - grâce à ce point d'introduction - d'injecter un débit de gaz de barrage. Le débit de ce gaz de barrage introduit en amont de l'écluse rotative est réglé de manière à être supérieur au débit de fuite de l'écluse et à créer un léger courant ascendant par rapport aux parois du tuyau de décharge, en amont du point d'introduction.

Le courant ascendant du gaz de barrage empêche le tassement des particules de polymère au-dessus du point d'introduction.

Avantageusement, la vitesse ascensionnelle du gaz de barrage est réglée de manière à ce que la vitesse différentielle entre le gaz et le solide soit comprise entre 0 et 10 fois la vitesse minimale de fluidisation. Il est également possible de régler le débit de solide déchargé en réglant la vitesse ascensionnelle des gaz à une valeur comprise entre la vitesse minimum de fluidisation et la vitesse terminale de chute libre des particules. Avantageusement, la vitesse ascensionnelle du gaz est égale à la vitesse minimum de fluidisation du solide dans les conditions de température et pression du récipient.

Dans le cas où le récipient est un récipient à lit fluidisé tel que, à titre d'exemple non limitatif, un réacteur de polymérisation à lit fluidisé, le débit du gaz de barrage est préférentiellement réglé à l'aide de trois mesures de pression - P1 dans le lit fluidisé à une hauteur h1 au-dessus et à proximité du distributeur de gaz, P2 dans le lit fluidisé, à une hauteur h2>h1 et P3 au point d'introduction du gaz de barrage à une hauteur h3 en-dessous du distributeur de gaz. Ces mesures sont le plus souvent telles que $(P3-P1) \geq (P1-P2) \times (h3+h1) / (h2-h1)$.

Dans le cas d'un réacteur de polymérisation à lit fluidisé, le gaz de barrage peut être prélevé sur le gaz de la navette ou avoir une autre composition. Il sera avantageusement constitué d'un ou plusieurs gaz inertes pour la polymérisation et sera de préférence froid, ceci de manière à empêcher ou inhiber la polymérisation dès que le solide rentre dans le tuyau de décharge.

De préférence, le dispositif de déchargement comprend un point d'introduction pour un gaz situé en amont d'au moins une écluse rotative.

La distance entre ce point d'introduction pour un gaz et ladite écluse rotative doit être faible et de préférence ne doit pas excéder 0,3 m.

On remarque que lors du début du déchargement, il est avantageux d'injecter un gaz à la fois par le point d'introduction situé entre la vanne et l'écluse et par le point d'introduction situé entre le récipient et la vanne. En cours de déchargement, l'introduction de gaz via le point situé entre la vanne et l'écluse s'avère le plus souvent suffisant.

Avantageusement, le dispositif de déchargement comprend également un point d'introduction pour un gaz situé en aval d'au moins une écluse rotative.

Par ce point, il est également possible d'injecter un gaz de barrage. Il est en outre possible de soutirer du gaz de manière à équilibrer les pressions entre les écluses et/ou de manière à diminuer les débits de fuite dans les écluses. La récupération de gaz via ce point est également possible.

De manière générale, ces points d'introduction pour un gaz en amont et/ou en aval des écluses permettent d'injecter un débit de gaz qui empêche le tassement des particules solides dans les écluses respectivement dans les tuyaux entre les écluses et en aval des écluses.

Dans les conditions du déchargement d'un réacteur de polymérisation des oléfines, la qualité de l'écoulement du polymère dans les tuyauteries séparant le point de déchargement dans le réacteur de l'entrée du solide dans la première écluse, ainsi que dans les tuyauteries séparant les écluses rotatives entre elles, joue un rôle important sur la performance de l'ensemble du système. En effet, lorsque le polymère circule en co-courant descendant avec du gaz et que le gaz a une vitesse supérieure au solide, ce dernier est compacté dans la tuyauterie au point de provoquer des pontages et des bouchages. Ce phénomène apparaît lorsque le solide est collant, compressible et que la hauteur de solide à l'état de lit fixe ou mobile compacté dans la tuyauterie dépasse environ 0.3 m.

Selon un mode de réalisation préféré de la présente invention, la vitesse de rotation des écluses est réglée de manière croissante en aval du récipient. Ceci permet d'éviter les accumulations de solide entre les écluses.

Un aspect surprenant de la présente invention réside dans le fait que les chutes de pression entre les différentes écluses ne sont pas uniformes.

Typiquement, pour le déchargement d'un récipient soumis à une pression comprise entre 25 et 35 bar, la chute de pression se répartit de la manière suivante dans un dispositif de déchargement comprenant trois écluses rotatives en série :

- 15 à 30 % dans la première écluse, typiquement 20 %,
- 25 à 35 % dans la deuxième écluse, typiquement 30 %,
- 55 à 45 % dans la troisième écluse, typiquement 50 %.

Les différences de chutes de pression entre les écluses sont d'autant plus importantes que la différence de densité du gaz entre l'entrée et la sortie du dispositif de déchargement est grande, ce qui se produit lorsque la chute de pression est élevée et lorsque le facteur de compressibilité du gaz dépend fortement de la pression.

Contrairement à ce que l'on pourrait croire, c'est la dernière écluse rotative située la plus loin en aval par rapport au réacteur qui est la plus sollicitée et non pas la première écluse à proximité du récipient. Le nombre total d'écluses minimum que l'on devra installer sera fonction de la différence de pression maximum que pourra supporter mécaniquement la dernière écluse rotative. Cette valeur maximum est estimée à environ 10 à 15 bar dans l'état actuel de la technologie.

Selon un autre aspect de la présente invention, on propose également un procédé de déchargement d'une poudre d'un récipient utilisant un dispositif de déchargement décrit plus haut. Le procédé selon l'invention étant de préférence appliqué au déchargement d'une poudre de polymère d'un récipient et plus particulièrement d'un réacteur de polymérisation à lit fluidisé.

Selon un premier mode de réalisation avantageux du procédé de déchargement, un débit d'un gaz de barrage est introduit en amont de ladite première écluse rotative créant un courant ascendant en direction du récipient.

La vitesse du courant ascendant du gaz de barrage est réglée de manière à ce que la vitesse différentielle entre le gaz et le solide soit comprise entre 0 et 10 fois la vitesse minimum de fluidisation et de préférence de manière à ce que la vitesse différentielle entre le gaz et le solide soit égale à la vitesse minimum de fluidisation du solide dans les conditions de température et pression du récipient.

Les écluses rotatives peuvent être mises sous pression avant le début du déchargement du récipient en injectant un gaz par un point d'introduction situé entre la vanne et ladite première écluse rotative. Cette mise sous pression des écluses rotatives avant le début de l'opération de déchargement facilite le début de l'opération de déchargement en limitant la perte de charge lors de l'ouverture de la vanne située entre le réacteur et la première écluse rotative.

Le débit de déchargement du réacteur est réglé en modifiant la vitesse de rotation des écluses rotatives. Le débit de soutirage du gaz du récipient est modulé en injectant un gaz par le point d'introduction situé entre la vanne et le réacteur.

Selon encore un autre aspect de la présente invention, on propose également un réacteur de polymérisation à lit fluidisé comportant un récipient équipé:

- d'un distributeur de gaz de fluidisation;
- d'un ou plusieurs points d'introduction de catalyseur, co-catalyseur, monomère, prépolymère ou de premier bloc de polymère;
- d'un ou plusieurs points de déchargement du solide;

comprenant un dispositif de déchargement décrit plus haut.

Le dispositif de déchargement peut être raccordé au distributeur de gaz de fluidisation qui comprend de préférence une grille de fluidisation pouvant être conique ou tronconique. Dans ce cas, le dispositif de déchargement est raccordé de préférence au point le plus bas de la grille de fluidisation.

Alternativement, le dispositif de déchargement peut être connecté à un point de déchargement du solide situé au-dessus de la grille de fluidisation, dans une paroi latérale du récipient du réacteur de polymérisation.

D'autres caractéristiques de l'invention appliquées plus spécifiquement au déchargement d'un réacteur de polymérisation à lit fluidisé sont décrites, à titre non limitatif, dans les exemples en relation avec les figures dans lesquelles

- la Fig. 1 représente schématiquement un réacteur de polymérisation à lit fluidisé comprenant un dispositif de déchargement permettant de décharger le réacteur par le fond,
- la Fig. 2 montre schématiquement un réacteur de polymérisation à lit fluidisé comprenant un dispositif de déchargement installé dans la paroi latérale du réacteur et
- la Fig. 3 montre les courbes caractéristiques des écluses : débit de fuite de gaz (en ordonnée) en fonction de la pression d'entrée (en abscisse) pour différentes pressions de sortie.

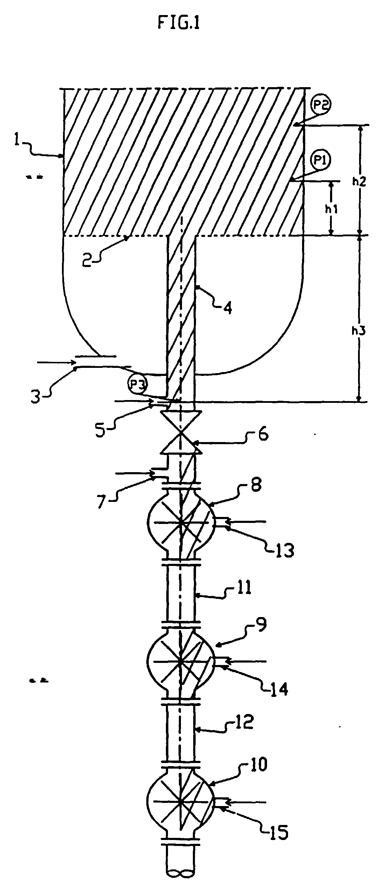

La Fig. 1 montre un réacteur 1 de polymérisation à lit fluidisé comprenant un distributeur de gaz de fluidisation 2 en forme de grille. Le gaz de fluidisation est injecté par une conduite d'injection 3 située dans la partie inférieure du réacteur 1 en dessous du distributeur de gaz 2. Ce gaz traverse le distributeur de gaz 2 et maintient les particules de polymère en croissance, contenues dans le réacteur en suspension formant ainsi le lit fluidisé. Ce gaz contient les monomères mélangés à un ou plusieurs gaz inertes, et s'échauffe au contact des particules et emporte la chaleur dégagée par la réaction vers des échangeurs externes avant d'être recyclé vers le réacteur 1.

Le produit solide est évacué par un tuyau d'évacuation 4 traversant le fond du réacteur 1 et débouchant dans le distributeur de gaz 2. Ce tuyau d'évacuation 4 comprend un premier point d'introduction 5 pour un gaz, à l'extérieur du réacteur en amont d'une vanne 6.

En aval de la vanne 6 et en amont de la première écluse rotative se situe un deuxième point d'introduction 7 pour un gaz. Ce point d'introduction 7 peut être de la même nature que le point d'introduction 5 situé en amont de la vanne 6 ou de nature différente.

Le débit du gaz de barrage peut être injecté en amont de la première écluse par le point d'introduction 5 entre la vanne et le réacteur ou par le point d'introduction 7 entre la vanne et la première écluse rotative ou bien par les deux points d'introduction 5 et 7 simultanément de façon à créer un léger courant ascendant de
gaz dans le conduit de déchargement empêchant la
compaction des particules de polymère. La vitesse différentielle entre le gaz de barrage et le solide est comprise entre 0 et 10 fois la vitesse minimale de
fluidisation du solide dans les conditions de température et pression du réacteur. Le débit de gaz de barrage
est réglé préférentiellement à l'aide de la pression P1
mesurée dans le lit fluidisé à une hauteur h1 au-dessus
du distributeur de gaz 2, de la pression F2 mesurée
dans le lit fluidisé, à une hauteur h2>h1 et de la mesure
de la pression P3 au point d'introduction du gaz de barrage à une hauteur h3 en-dessous du distributeur de
gaz 2 de manière à ce que (P3-P1) ≥ (P1-P2) x
(h3+h1) / (h2-h1).

En aval de la vanne 6, trois écluses rotatives 8,
9, 10 montées en série évacuent le produit formé du
réacteur. Les trois écluses 8, 9, 10 sont séparées entre
elles par une conduite 11, 12. Ces conduites entre les
écluses ont une longueur qui ne dépasse pas environ
0,3 m.

Les écluses sont chacune équipées d'une
point d'injection 13, 14 et 15 permettant d'injecter un
débit de gaz à l'intérieur de chaque écluse. Ces points
d'injection 13, 14, 15 sont des dispositifs usuels permettant d'étancher la garniture mécanique et la paroi de
l'écluse rotative.

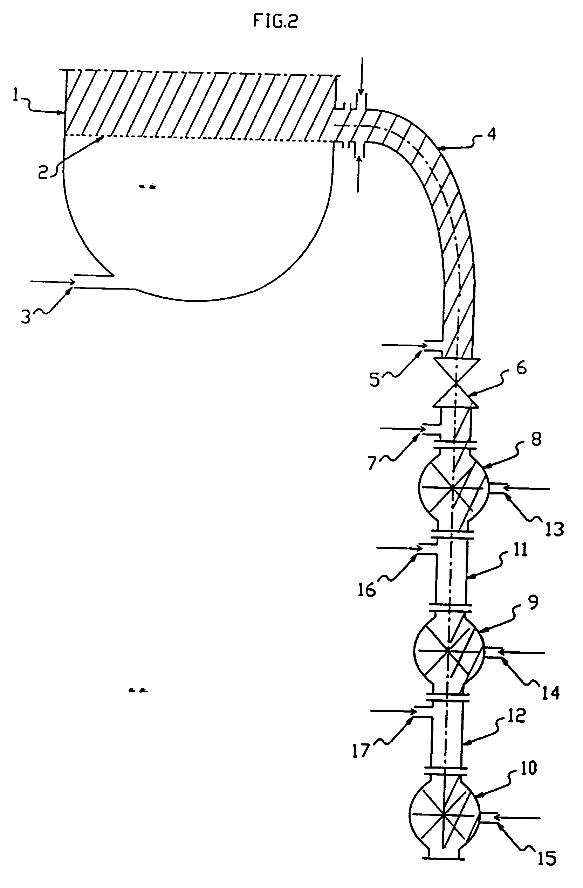

La Fig. 2 montre le même réacteur qu'à la Fig.
1 sauf que le dispositif de déchargement n'est pas raccordé via le fond du réacteur mais par une ouverture
pratiquée dans la paroi latérale au-dessus du distributeur de gaz de fluidisation. Ce dispositif comprend en
outre des points d'introduction 16, 17 pour un gaz situés
entre la première et la deuxième écluse rotative 8, 9,
respectivement entre la deuxième et la troisième écluse
rotative 9, 10.

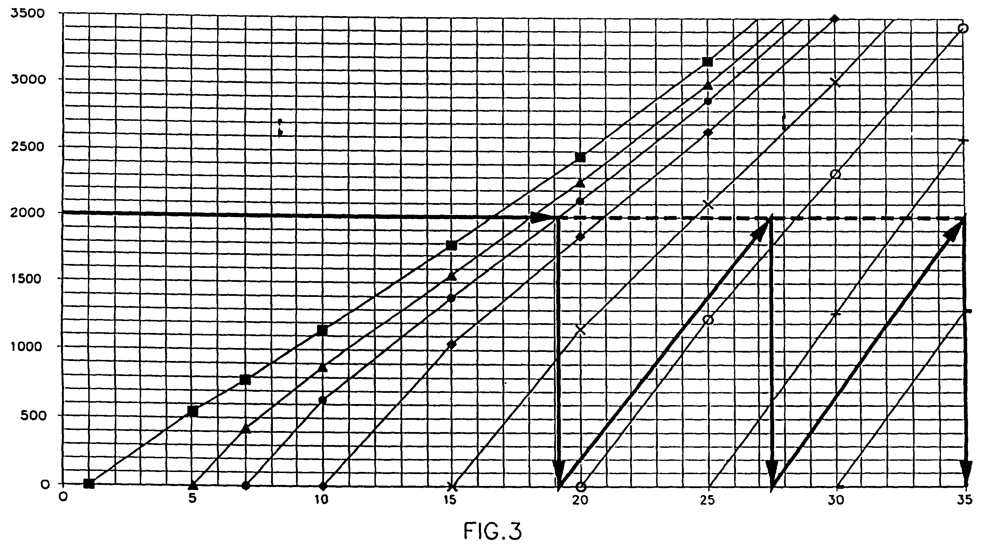

La figure 3 montre les courbes caractéristiques
des écluses : débit de fuite de gaz en ordonnée (en
kg/h) en fonction de la pression d'entrée en abscisse
(en bar) pour différentes pressions de sortie (en bar).
Légende des pressions de sortie :

1 bar : ─■─

5 bar : ─▲─

7 bar : ─●─

10 bar : ─◆─

15 bar : ─✕─

20 bar : ─○─

25 bar : ─+─

30 bar : ─◗─

Ce graphique montre qu'il est possible de réduire substantiellement le débit de fuite de gaz par le fait de mettre
plusieurs écluses rotatives en série. En effet, pour un
réacteur de polymérisation fonctionnant à 35 bar
déchargé jusqu'à une pression de 7 bar, le débit de fuite
du système est de 2000 kg/h avec des pressions intermédiaires de 27,6 bar, et 19,1 bar. Le débit de fuite est
donc réduit à 2 t/h.

Le débit de fuite aurait été beaucoup plus élevé
si une seule écluse rotative avait été utilisée.

Exemple 1

Soit un réacteur de polymérisation du propylène en phase gazeuse d'un diamètre de 3,2 m et d'une
hauteur (partie cylindrique) de 12 m produisant 20 t/h
de polypropylène. La polymérisation est effectuée à une
pression de 35 bar et à une température de 80°C. Le
polymère produit a une masse volumique en vrac de
450 kg/m$^3$. Les particules de polymère ont une densité
de 900 kg/m$^3$ et un diamètre moyen de 650 microns. Le
poids moléculaire moyen du mélange gazeux dans le
réacteur est de 39,8 kg/mol.

Le réacteur est équipé d'un système de
déchargement comprenant une tuyauterie verticale
d'un diamètre de 0,3 m et d'une hauteur de 4 m dont le
sommet est situé au niveau de la grille de fluidisation et
la base est située à l'extérieur et juste en dessous du
réacteur.

Cette tuyauterie est munie dans sa partie intérieure successivement et de haut en bas d'un dispositif
d'injection de gaz, d'une vanne d'isolement de type à
boisseau sphérique et passage intégral (ball valve) et
d'un second dispositif d'injection de gaz, ladite tuyauterie étant raccordée à sa base à une série de 3 écluses
séparées l'une de l'autre par des tronçons de tuyauterie
verticale d'une longueur de 0,5 m.

Les écluses présentent les dimensions suivantes :

- longueur du rotor : 290 mm
- diamètre du rotor : 630mm
- volume du rotor : 50 dm$^3$
- nombre d'alvéoles : 30 (dont 20 étanches)
- épaisseur des pales : 10 mm
- vitesse du rotor : 15 t/min.

Pour un réacteur de polymérisation fonctionnant à 35 bar et produisant 20 t/h de polymère déchargé
jusqu'à une pression de 7 bar, le débit de fuite du système est de 2000 kg/h et les pressions intermédiaires
de 27,6 bar, et 19,1 bar pour une pression de sortie de
7 bar. Le débit de fuite est donc réduit à 2 t/h soit à 10
% du débit de solide.

**Revendications**

1.   Dispositif de déchargement d'une poudre d'un récipient sous pression caractérisé en ce qu'il comprend :

- au moins deux écluses rotatives en série,
- une vanne située entre le réacteur et la première écluse,
- ainsi qu'un point d'introduction d'un gaz situé entre ladite vanne et ledit réacteur.

2. Dispositif selon la revendication 1, appliqué au déchargement d'une poudre de polymère.

3. Dispositif selon la revendication 2, appliqué au déchargement d'une poudre de polymère d'un réacteur de polymérisation à lit fluidisé.

4. Dispositif de déchargement selon l'une quelconque des revendications 1 à 3, caractérisé en ce qu'il comprend en outre un point d'introduction pour un gaz, situé entre la vanne et la première écluse.

5. Dispositif de déchargement selon l'une quelconque des revendications 1 à 4, caractérisé en ce qu'il comprend un point d'introduction pour un gaz situé en amont d'au moins une écluse rotative.

6. Dispositif de déchargement selon l'une quelconque des revendications 1 à 5, caractérisé en ce qu'il comprend a point d'introduction pour un gaz situé en aval d'au moins une écluse rotative.

7. Dispositif de déchargement selon l'une quelconque des revendications précédentes, caractérisé en ce que la vitesse de rotation des écluses est réglée de manière croissante en aval du récipient.

8. Procédé de déchargement d'une poudre d'un récipient sous pression utilisant un dispositif de déchargement tel que revendiqué dans une quelconque des revendications 1 à 7.

9. Procédé de déchargement selon la revendication 8, caractérisé en ce qu'un débit d'un gaz de barrage est introduit en amont de ladite première écluse rotative créant un courant ascendant en direction du récipient.

10. Procédé de déchargement selon la revendication 9, caractérisé en ce que la vitesse du courant ascendant du gaz de barrage est réglée de manière à ce que la vitesse différentielle entre le gaz et le solide soit comprise entre 0 et 10 fois la vitesse minimum de fluidisation.

11. Procédé de déchargement selon la revendication 10, caractérisé en ce que la vitesse du courant ascendant du gaz de barrage est réglée de manière à ce que la vitesse différentielle entre le gaz et le solide soit égale à la vitesse minimum de fluidisation du solide dans les conditions de température et pression du récipient.

12. Procédé de déchargement selon l'une quelconque des revendications 8 à 11, caractérisé en ce que les écluses rotatives sont mises sous pression avant le début du déchargement du récipient en injectant un gaz par un point d'introduction situé entre la vanne et ladite première écluse rotative.

13. Procédé de déchargement selon l'une quelconque des revendications 8 à 12, caractérisé en ce que le débit de déchargement du récipient est réglé en modifiant la vitesse de rotation des écluses rotatives.

14. Procédé de déchargement selon l'une quelconque des revendications 8 à 13, caractérisé en ce que le débit de soutirage du gaz du récipient est modulé en injectant un gaz par le point d'introduction situé entre la vanne et le récipient.

15. Réacteur de polymérisation à lit fluidisé comportant un récipient équipé :

- d'un distributeur de gaz de fluidisation,
- d'un ou plusieurs points d'introduction de catalyseur, co-catalyseur, monomère, prépolymère ou de premier bloc de polymère,
- d'un ou plusieurs points de déchargement du solide.

caractérisé en ce qu'il comprend un dispositif de déchargement selon l'une quelconque des revendications 1 à 7.

16. Réacteur de polymérisation selon la revendication 15, caractérisé en ce que le dispositif de déchargement est raccordé au distributeur de gaz de fluidisation.

17. Réacteur de polymérisation selon la revendication 15, caractérisé en ce que le distributeur de gaz de fluidisation comprend une grille de fluidisation conique ou tronconique et en ce que le dispositif de déchargement est raccordé au point le plus bas de la grille de fluidisation.

18. Réacteur de polymérisation selon la revendication 15, caractérisé en ce que le dispositif de déchargement est connecté à un point de déchargement du solide situé au-dessus de la grille de fluidisation, dans une paroi latérale du récipient du réacteur de polymérisation.

FIG.1

## FIG.2

FIG.3

EP 0 899 008 A1

**Office européen des brevets**

## RAPPORT DE RECHERCHE EUROPEENNE

Numéro de la demande

EP 98 20 2763

### DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | GB 2 271 114 A (FULLER CO) 6 avril 1994 <br> * page 7, alinéa 2 – page 8, alinéa 2 * <br> * page 10, alinéa 2 – page 11, alinéa 1 * <br> * page 12, alinéa 3; revendications 13-20; figures 1-3 * | 1-9 | B01J8/00 <br> B01J8/24 <br> B65G53/16 |
| A | FR 2 312 287 A (LESIEUR COTELLE) 24 décembre 1976 <br> * page 5, ligne 8 – page 6, ligne 18; revendications 1-8; figures 2-4 * | 1-9,13 | |
| A | US 5 265 983 A (WENNERSTROM JERALD M ET AL) 30 novembre 1993 <br> * revendications 1-6,11-19,24; figure 1 * | 1-6,8,15 | |
| A | FR 2 467 628 A (INST GAS TECHNOLOGY) 30 avril 1981 <br> * revendications 1,5,8; figure 1 * | 1-3,8,15 | |
| A | US 3 710 808 A (CELADA J ET AL) 16 janvier 1973 <br> * colonne 5, ligne 10 – ligne 62; revendications 1-15; figures 1,4 * | 1,3,4,6, 13 | |
| D,A | US 4 495 337 A (RAUFAST CHARLES) 22 janvier 1985 <br> * abrégé; figures 2,3 * <br> * colonne 3, ligne 63 – colonne 5, ligne 5 * | 1-3,15 | |
| A | US 4 703 094 A (RAUFAST CHARLES) 27 octobre 1987 <br> * colonne 11, ligne 36 – ligne 55 * <br> * colonne 12, ligne 21 – ligne 39 * <br> * figures 1-3 * | 1-5,17 | |

**DOMAINES TECHNIQUES RECHERCHES (Int.Cl.6)**

B01J
B65G

Le présent rapport a été établi pour toutes les revendications

| Lieu de la recherche | Date d'achèvement de la recherche | Examinateur |
|---|---|---|
| LA HAYE | 25 novembre 1998 | Vlassis, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**　　EP 98 20 2763

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-11-1998

| Document brevet cité au rapport de recherche | Date de publication | Membre(s) de la famille de brevet(s) | Date de publication |
|---|---|---|---|
| GB 2271114　A | 06-04-1994 | CA　2103642 A,C<br>JP　6179712 A | 27-02-1994<br>28-06-1994 |
| FR 2312287　A | 24-12-1976 | AUCUN | |
| US 5265983　A | 30-11-1993 | AU　3808393 A<br>WO　9324399 A | 30-12-1993<br>09-12-1993 |
| FR 2467628　A | 30-04-1981 | US　4247240 A<br>AU　 538143 B<br>AU　6357880 A<br>BR　8006409 A<br>CA　1126703 A<br>DD　 153672 A<br>DE　3038577 A<br>GB　2062492 A,B<br>IN　 154937 A<br>ZA　8006179 A | 27-01-1981<br>02-08-1984<br>30-04-1981<br>12-05-1981<br>29-06-1982<br>27-01-1982<br>30-04-1981<br>28-05-1981<br>22-12-1984<br>24-02-1982 |
| US 3710808　A | 16-01-1973 | AT　 327249 B<br>AT　 769471 A<br>BE　 772043 A<br>CA　 952869 A<br>DE　2141898 A<br>FR　2107127 A<br>GB　1322437 A<br>LU　 63841 A<br>NL　7111676 A,B | 26-01-1976<br>15-04-1975<br>01-03-1972<br>13-08-1974<br>23-03-1972<br>05-05-1972<br>04-07-1973<br>27-06-1972<br>10-03-1972 |
| US 4495337　A | 22-01-1985 | FR　2522281 A<br>AT　 13818 T<br>AU　 554682 B<br>AU　1175883 A<br>CA　1199477 A<br>EP　0088655 A<br>FI　 830631 A,B,<br>JP　1705675 C<br>JP　3073565 B<br>JP　59025804 A<br>PT　 76288 B<br>ZA　8301252 A | 02-09-1983<br>15-07-1985<br>28-08-1986<br>01-09-1983<br>21-01-1986<br>14-09-1983<br>27-08-1983<br>27-10-1992<br>22-11-1991<br>09-02-1984<br>12-11-1985<br>26-09-1984 |
| US 4703094　A | 27-10-1987 | FR　2577558 A<br>AU　 591650 B<br>AU　5370186 A<br>CA　1248692 A | 22-08-1986<br>14-12-1989<br>28-08-1986<br>10-01-1989 |

Pour tout renseignement concernant cette annexe : voir Journal Officiel de l'Office européen des brevets, No.12/82

**ANNEXE AU RAPPORT DE RECHERCHE EUROPEENNE
RELATIF A LA DEMANDE DE BREVET EUROPEEN NO.**     EP 98 20 2763

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

25-11-1998

| Document brevet cité au rapport de recherche | Date de publication | Membre(s) de la famille de brevet(s) | Date de publication |
|---|---|---|---|
| US 4703094 A | | EP 0192427 A | 27-08-1986 |
| | | FI 860723 A,B, | 20-08-1986 |
| | | JP 6067977 B | 31-08-1994 |
| | | JP 61200104 A | 04-09-1986 |
| | | KR 9312266 B | 28-12-1993 |
| | | PT 82040 B | 27-05-1988 |
| | | US 4902483 A | 20-02-1990 |

Pour tout renseignement concernant cette annexe : voir Journal Officiel de l'Office européen des brevets, No.12/82